# EUROPEAN PATENT SPECIFICATION

(11) **EP 3 546 915 B1**
(45) Date of publication and mention of the grant of the patent: **30.06.2021**
(21) Application number: 19159510.7
(22) Date of filing: 26.02.2019
(51) Int. Cl.: G01M 17/02

(54) **APPARATUS FOR THE ANALYSIS OF THE BEHAVIOUR OF A TYRE AT THE INTERFACE WITH THE GROUND**
VORRICHTUNG ZUR ANALYSE DES VERHALTENS EINES REIFENS UNTER BODENKONTAKT
APPAREIL D'ANALYSE DU COMPORTEMENT D'UN PNEU À L'INTERFACE AVEC LE SOL

(30) Priority: 05.03.2018 IT 201800003276
(43) Date of publication of application: 02.10.2019
(73) Proprietor: Bridgestone Europe NV/SA, 1932 Zaventem (BE)
(72) Inventor: Mauri, Stefano, 00128 Rome (IT); Alleva, Lorenzo, 00128 Rome (IT)
(74) Representative: Marchetti, Alessio

(56) References cited:
- EP-A1- 0 695 935
- EP-A2- 2 554 969
- DE-A1-102013 107 018

## Description

### Technical field of the invention

The present invention refers to an apparatus for the analysis of real data in relation to the interface region between a pneumatic tyre and the road surface. In particular, this apparatus makes it possible to detect the pressure footprint and/or the region in contact with the ground, particularly on wet surfaces, under differing dynamic driving conditions (for example, rolling, braking and/or steering of the pneumatic tyre).

### Background

Analyzing the behavior of a pneumatic tyre under differing dynamic driving conditions, such as rolling, braking and steering, on wet surfaces, is essential in order to evaluate the performance thereof and to ensure a high level of safety. In particular, the analysis of the interface region between the pneumatic tyre and the road surface, i.e., the region of contact between the pneumatic tyre and the road surface, makes it possible to obtain important information regarding how good the design of the pneumatic tyre is, such as the pressure footprint and the water expulsion profile.

The pressure footprint is defined as the "map" of the pressure exerted by the pneumatic tyre upon the region interfacing with the road surface.

Insofar as, during steering and/or braking, said interface region varies, and the load of the vehicle upon the pneumatic tyres is not uniformly distributed thereupon, it is necessary to study the distribution of the pressure upon the interface region under all dynamic driving conditions in order to make an overall assessment of the performance and quality of the pneumatic tyre.

Furthermore, the analysis of the interface region under wet conditions makes it possible to evaluate the residual contact area as the operating parameters, such as speed, inflation pressure, vertical load and thickness of the film of water, vary.

In order to carry out these types of analyses it is possible to use theoretical simulation models but it is nonetheless preferable to perform the empirical analysis of the data relating to the actual behavior of the pneumatic tyre under differing dynamic driving conditions. In this case, in order to obtain data relating to the actual behavior of the pneumatic tyre it is necessary to resort to a road test. It is currently however not possible to perform the analysis of the interface region, especially of the pressure footprint, with a high degree of accuracy during pneumatic tyre tests on wet surfaces under dynamic driving conditions.

In general, for these tests, under differing dynamic driving conditions, the pneumatic tyre is made to roll, brake and/or steer in contact with a detection plate of a measurement apparatus. This detection plate consists of a layer of transparent and smooth glass, resin or polymeric material, possibly coupled to a sensor film layer for the detection of the pressure footprint. Below the detection plate there are sources of illumination and an image detection device, with the lens facing the detection plate in order to acquire a sequence of images of the sensor film after the passage of the pneumatic tyre or of the interface region of the pneumatic tyre during the passage thereof.

Under particular test conditions however, for example under wet road test conditions, i.e., in the presence of water on the road surface and therefore on the detection plate, when the pneumatic tyre is made to roll, steer or brake upon the detection plate, the images captured by the detection device are not completely usable and/or realistic, in particular due to the reduction of friction due to the presence of water upon the detection plate.

This renders the subsequent study of the pressure footprint and of the region of contact of a pneumatic tyre difficult and less reliable, in particular - but not only - on wet surfaces.

DE102013107018A1 discloses a device for detecting a contact surface of a component on a transparent contact loading plate, comprising at least one image acquisition system arranged under the contact loading plate and aligned from below to detect the contact surface.

EP2554969 discloses a rotary drum used in a tire testing machine having a road surface base material made of an aluminum alloy and provided with a road surface onto which a tire is pushed. The road surface is coated with a thermally-sprayed steel film having higher hardness than the road surface base material, and polished.

### Summary of the invention

The purpose of the present invention is therefore to provide an apparatus for the analysis of the behavior of a pneumatic tyre at the interface with the road surface, in particular on a wet road surface, under dynamic driving conditions, which makes it possible to avoid the drawbacks mentioned above with reference to the prior art.

This is achieved by means of an apparatus as defined in claim 1. Secondary characteristics of the present invention are defined within the dependent claims.

The present invention, in overcoming the aforementioned problems, involves numerous and evident advantages.

In particular, in the apparatus according to the present invention, the surface of the detection plate which, in use, is in contact with the pneumatic tyre in motion (rolling, braking and/or steering), is implemented in such a way as to increase the friction of the pneumatic tyre with the detection plate in relation to the apparatus of the prior art.

In this way, by virtue of the increase in friction, the pneumatic tyre adheres more to the detection plate of the apparatus and avoids instead any slipping in relation to the latter, thereby allowing the image detection device to acquire sharper and more precise images of the pressure footprint and/or of the residual contact region when wet under differing dynamic driving conditions, and that also correspond and are closer to the actual behavior of the pneumatic tyre during normal use on the road.

The advantages, as well as the characteristics and usage methods of the present invention, will become clear from the following detailed description of preferred embodiments thereof, given purely by way of non-limiting examples, making reference to the accompanying figures, wherein:
- Figure 1 depicts a cross section of a first embodiment of an apparatus according to the present invention;
- Figure 2 is a schematic representation of the cross section of an interface layer of the apparatus according to a preferred embodiment.

Other advantages, characteristics and the usage methods for the present invention, will become clear from the following detailed description of some embodiments, given purely by way of non-limiting examples.

### Detailed description of preferred embodiments

Various embodiments and variations of the invention will now be described, and this with reference to the figures introduced above.

The present invention refers to an apparatus for the analysis of the behavior of a pneumatic tyre at the interface region between a pneumatic tyre and the road surface, under differing dynamic driving conditions (for example, rolling, steering, braking and/or combinations thereof), and under different surface conditions, in particular when wet.

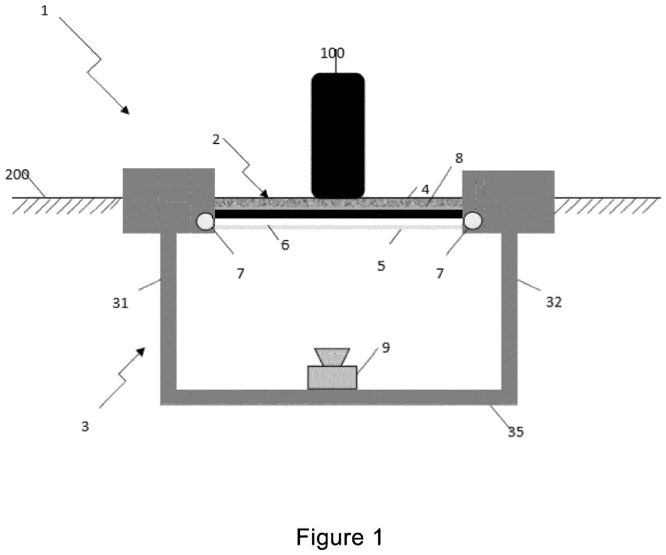

With specific reference to Figure 1, the apparatus, generally indicated as a whole with 1, comprises a detection plate 2 and a support frame 3, suitable for carrying the latter.

The detection plate 2 and the support frame 3 together form a substantially box-shaped hollow structure.

Preferably, when the apparatus is in use, the detection plate 2 is located at the level of the road surface 200 while the support frame 3 is at least partially below ground. In particular, the detection plate 2 is surrounded and supported along the perimeter thereof by four side walls 31, 32, 33, 34 of the support frame 3, positioned perpendicularly with respect thereto.

Thus, the box-like structure is closed by a bottom wall 35, parallel to the detection plate 2.

The detection plate 2 is multi-layered, i.e., it consists of at least two different layers overlapping one another.

A first layer of the multilayer detection plate is represented by the interface layer 4 which, in use, comes into contact with the pneumatic tyre 100 in motion. In order to test the behavior of the pneumatic tyre on wet surfaces, the interface layer can be covered with water.

This interface layer 4 consists of a rough material, i.e., that has micro-geometric irregularities such as grooves, wrinkles, ripples or granularity, at least at the interface with the pneumatic tyre 100, in such a way as to promote the adherence of the latter to the interface layer 4. Preferably, the roughness Ra of the interface layer is between 16 µm and 160 µm. More preferably, the roughness Ra is between 32 µm and 140 µm, even more preferably approximately equal to 125 µm.
The roughness being due to the presence of particles protruding from the interface surface. The particles can for example be made of glass or a mineral material, such as aluminum oxide or emery powder.

Preferably the granulometry of the protruding particles is between 80 and 130 µm, even more preferably between 90 and 110 µm, even better if around 100 µm. In use, the layer formed by the particles is in contact with the pneumatic tyre 100.

The interface layer 4 can be made of polycarbonate resin such as, for example, Lexan.

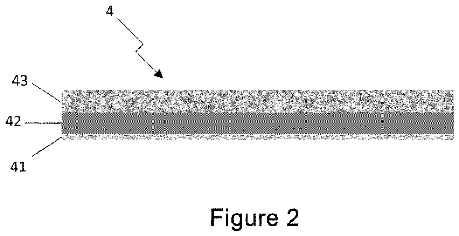

According to a possible embodiment, the interface layer 4 is in turn a multilayer material, illustrated by way of example in Figure 2. In this case, the interface layer 4 comprises an adherent layer 41, made of an adhesive material, cohesive to a backing layer 42, made of a material such as paper or fabric or a polymeric film and a layer 43 of a rough material.

The support layer 42 is then covered with a rough layer 43, the roughness being due to the presence of particles protruding from the interface surface. The particles can for example be made of glass or a mineral material, such as aluminum oxide or emery powder.

Preferably the granulometry of the protruding particles is between 80 and 130 µm, even more preferably between 90 and 110 µm, even better if around 100 µm. In use, the layer formed by the particles is in contact with the pneumatic tyre 100.

The multilayer detection plate 2 further comprises a base layer 5. This layer 5 is coupled directly or indirectly, i.e. by means of other interposed layers, with the interface layer 4.

The base layer 5 is made from a material that is at least partially transparent, preferably optically transparent, in such a way that most of the light that hits it can pass through it without being reflected. For example, the base layer 5 can be made of glass or plexiglas.

As shown in Figure 1, between the interface layer 4 and the base layer 5 of the detection plate 2 there is also an intermediate layer 6, made of a material that is suitable for promptly detecting the pressure exerted by the pneumatic tyre 100 upon the interface layer 4.

Preferably, such a pressure sensor layer 6 is a tactile sensor film that makes it possible to indicate the magnitude and distribution of the pressure exerted upon every point of a surface.

Such a tactile sensor film comprises, for example, particles and/or pigments, distributed within the useful operational area of the layer with a certain spatial resolution, which modify the ability thereof to emit light and/or change the brightness and/or color response thereof as a function of the pressure exerted thereupon.

Thus, the pressure exerted upon the interface layer 4 by the pneumatic tyre 100 is transferred to the pressure sensor layer 6 and, in response, the tactile sensor film, of which the latter is preferably made, instantly changes color locally at each point or emits light at differing intensities, depending upon the actual pressure exerted by the pneumatic tyre 100 at each point of the interface region.

Furthermore, when the pressure sensor layer 6 is present, a protective layer 8 can be interposed between it and the interface layer 4 that is suitable for safeguarding the integrity of the pressure sensor layer 6. Preferably, this layer 8 is made of a polymeric material.

The base layer 5 can advantageously be directly illuminated by at least one lighting element 7 positioned on the support frame 3. Preferably, in order to ensure uniform illumination, a plurality of lighting elements 7 is applied to the side walls 31, 32, 33, 34 of the support frame 3 at the contact region between the latter and the base layer 5, in such a way that the beam of light emitted by them passes through the base layer 5 transversely.

The apparatus further comprises an image detection device 9 arranged in such a manner as to be able to frame and capture the base layer 5 directly (or indirectly by means of an appropriately placed mirror). Preferably, the image detection device 9 rests on the bottom wall 35 of the support frame 3, or is inserted within said wall, with the lens thereof pointing towards the base layer 5.

Furthermore, the image detection device 9 is preferably a high-speed camera.

By virtue of the transparency and illumination of the base layer 5, the image detection device 9 can clearly acquire a sequence of images of the interface region of the pneumatic tyre 100 during the passage thereof upon the interface layer 4 of the detection plate or of the response of the pressure sensor layer 6.

The invention has heretofore been described with reference to preferred embodiments. It is to be understood that there may exist other embodiments that relate to the same inventive nucleus, as defined by the scope of protection of the claims set out below.

## Claims

1. Apparatus (1) for the analysis of the dynamic behavior of a pneumatic tyre (100) within an interface region with the ground, including:
• a support frame (3);
• a multilayer detection plate (2), carried by said support frame (3), in turn comprising:
- an interface layer (4) which, in use, comes into contact with the pneumatic tyre (100) in motion,
- a base layer (5), coupled to said interface layer (4) wherein said base layer (5) is at least partially transparent;-
• an image detection device (9) arranged in such a manner as to be able to frame and directly or indirectly capture the base layer (5) of the multilayer detection plate (2),
**characterized in that** said interface layer (4) has a roughness (Ra) >= 16 µm at least at said interface region and wherein said interface layer (4) is at least partially transparent.

2. Apparatus (1) according to claim 1, wherein said interface layer (4) has a rough surface finish comprising a plurality of protruding particles.

3. Apparatus (1) according to claim 2, wherein said particles are of an abrasive material.

4. Apparatus (1) according to claim 2 or 3, wherein the granulometry of the particles of said interface layer (4) is between 80 and 130 µm.

5. Apparatus (1) according to claim 4, wherein the granulometry of the particles is between 90 and 110 µm.

6. Apparatus (1) according to claim 5, wherein the granulometry of the particles is about 100 µm.

7. Apparatus (1) according to any one of the preceding claims wherein the image detection device (9) is a high-speed camera.

8. Apparatus (1) according to any one of the preceding claims, further comprising a lighting element (7), suitable for directly illuminating the base layer (5) of the multilayer detection plate (2).

9. Apparatus (1) according to claim 8 wherein the lighting element (7) is positioned on the support frame (3) in such a way that the beam of light emitted by it passes through the base layer (5) transversely.

## Patentansprüche

1. Vorrichtung (1) zur Analyse des dynamischen Verhaltens eines Luftreifens (100) innerhalb eines Grenzflächenbereichs zum Boden, einschließend:
• einen Tragrahmen (3);
• eine durch den Tragrahmen (3) getragene mehrschichtige Erfassungsplatte (2), wiederum umfassend:
- eine Grenzflächenschicht (4), die im Gebrauch mit dem in Bewegung befindlichen Luftreifen (100) in Kontakt kommt,
- eine Basisschicht (5), die mit der Grenzflächenschicht (4) verbunden ist, wobei die Basisschicht (5) mindestens teilweise transparent ist;-
• eine Bilderfassungseinrichtung (9), die so angeordnet ist, dass sie in der Lage ist, die Basisschicht (5) der mehrschichtigen Erfassungsplatte (2) zu umrahmen und direkt oder indirekt zu erfassen,
**dadurch gekennzeichnet, dass** die Grenzflächenschicht (4) mindestens im Grenzflächenbereich eine Rauheit (Ra) >= 16 µm aufweist und wobei die Grenzflächenschicht (4) mindestens teilweise transparent ist.

2. Vorrichtung (1) nach Anspruch 1, wobei die Grenzflächenschicht (4) eine raue Oberflächenbeschaffenheit aufweist, die eine Vielzahl hervorstehender Partikel umfasst.

3. Vorrichtung (1) nach Anspruch 2, wobei die Partikel aus einem abrasiven Material bestehen.

4. Vorrichtung (1) nach Anspruch 2 oder 3, wobei die Granulometrie der Partikel der Grenzflächenschicht (4) zwischen 80 und 130 µm liegt.

5. Vorrichtung (1) nach Anspruch 4, wobei die Granulometrie der Partikel zwischen 90 und 110 µm liegt.

6. Vorrichtung (1) nach Anspruch 5, wobei die Granulometrie der Partikel ca. 100 µm beträgt.

7. Vorrichtung (1) nach einem der vorstehenden Ansprüche, wobei die Bilderfassungseinrichtung (9) eine Hochgeschwindigkeitskamera ist.

8. Vorrichtung (1) nach einem der vorstehenden Ansprüche, ferner umfassend ein Beleuchtungselement (7), das zum direkten Beleuchten der Basisschicht (5) der mehrschichtigen Detektionsplatte (2) geeignet ist.

9. Vorrichtung (1) nach Anspruch 8, wobei das Beleuchtungselement (7) derart auf dem Tragrahmen (3) positioniert ist, dass der durch das Beleuchtungselement emittierte Lichtstrahl die Basisschicht (5) quer durchläuft.

## Revendications

1. Appareil (1) pour l'analyse du comportement dynamique d'un pneumatique (100) à l'intérieur d'une région d'interface avec le sol, incluant :
• un cadre de support (3) ;
• une plaque de détection multicouche (2), portée par ledit cadre de support (3), à son tour comprenant :
- une couche d'interface (4) qui, en utilisation, vient en contact avec le pneumatique (100) en mouvement,
- une couche de base (5), couplée à ladite couche d'interface (4) dans laquelle ladite couche de base (5) est au moins partiellement transparente ;-
• un dispositif de détection d'image (9) agencé de manière à pouvoir cadrer et capturer directement ou indirectement la couche de base (5) de la plaque de détection multicouche (2),
**caractérisé en ce que** ladite couche d'interface (4) a une rugosité (Ra) >= 16 µm au moins au niveau de ladite région d'interface et dans lequel ladite couche d'interface (4) est au moins partiellement transparente.

2. Appareil (1) selon la revendication 1, dans lequel ladite couche d'interface (4) a une finition de surface rugueuse comprenant une pluralité de particules en saillie.

3. Appareil (1) selon la revendication 2, dans lequel lesdites particules sont constituées d'un matériau abrasif.

4. Appareil (1) selon la revendication 2 ou 3, dans lequel la granulométrie des particules de ladite couche d'interface (4) est comprise entre 80 et 130 µm.

5. Appareil (1) selon la revendication 4, dans lequel la granulométrie des particules est comprise entre 90 et 110 µm.

6. Appareil (1) selon la revendication 5, dans lequel la granulométrie des particules est d'environ 100 µm.

7. Appareil (1) selon l'une quelconque des revendications précédentes, dans lequel le dispositif de détection d'image (9) est une caméra à grande vitesse.

8. Appareil (1) selon l'une quelconque des revendications précédentes, comprenant en outre un élément d'éclairage (7), capable d'éclairer directement la couche de base (5) de la plaque de détection multicouche (2).

9. Appareil (1) selon la revendication 8, dans lequel l'élément d'éclairage (7) est positionné sur le cadre de support (3) de telle manière que le faisceau de lumière émis par celui-ci traverse la couche de base (5) de manière transversale.
